# EUROPÄISCHE PATENTSCHRIFT

(11) **EP 2 372 857 B1**
(45) Veröffentlichungstag und Bekanntmachung des Hinweises auf die Patenterteilung: **07.10.2015**
(21) Anmeldenummer: 10158654.3
(22) Anmeldetag: 31.03.2010
(51) Int. Cl.: H02H 3/16, H02H 3/33

(54) **Bestimmung des Fehlerstromanteils eines Differenzstroms**
Determination of the proportion of differential current made up of faulty current
Détermination de la partie de courant de fuite d'un courant différentiel

(43) Veröffentlichungstag der Anmeldung: 05.10.2011
(73) Patentinhaber: SMA Solar Technology AG, 34266 Niestetal (DE)
(72) Erfinder: Bettenwort, Gerd, 34119 Kassel (DE); Bieniek, Sebastian, 35066 Frankenberg (DE); Eidenmüller, Lutz, 64753 Brombachtal (DE); Pröve, Olaf, 34346 Hann. Münden (DE)
(74) Vertreter: Lahnor, Peter

(56) Entgegenhaltungen:
- EP-A2- 1 229 629
- DE-A1- 10 253 864
- US-A1- 2003 067 723

## Beschreibung

### TECHNISCHES GEBIET DER ERFINDUNG

Die Erfindung bezieht sich auf ein Verfahren zur Bestimmung des Fehlerstromanteils eines Differenzstroms, der als Stromsumme über den Strom eines Wechselstromgenerators führende Leitungen erfasst wird, mit den Merkmalen des Oberbegriffs des unabhängigen Patentanspruchs 1 sowie auf eine entsprechende Vorrichtung zur Bestimmung des Fehlerstromanteils eines Differenzstroms mit den Merkmalen des Oberbegriffs des unabhängigen Patentanspruchs 13.

Bei dem Wechselstromgenerator handelt es sich insbesondere um einen solchen, bei dem ein Wechselrichter vorgesehen ist, der einen von einer Stromquelle bereitgestellten Gleichstrom in einen Wechselstrom umrichtet. Bei der Gleichstromquelle kann es sich insbesondere um eine Photovoltaikanlage handeln, die allein aufgrund ihrer räumlichen Ausdehnung eine nicht unerhebliche Ableitkapazität nach Erde aufweist. Aus dieser Ableitkapazität und aus Potentialverschiebungen gegenüber Erde, die im Betrieb des Wechselrichters auftreten, resultieren Ableitströme nach Erde. Diese Ableitströme finden sich in einem Differenzstrom wieder, der vielfach zum schnellen Erkennen des Auftretens von Fehlerströmen überwacht wird. Große Ableitströme führen jedoch dazu, dass die Empfindlichkeit bei der Erkennung von Fehlerströmen durch Überwachung des Differenzstroms reduziert ist. Daher ist es von Interesse, den eigentlichen Fehlerstromanteil des Differenzstroms zu bestimmen.

Mit der Formulierung "den Strom des Wechselstromgenerators führende Leitungen" ist irgendeine Gruppe von Leitungen des Wechselstromgenerators gemeint, die zusammen den gesamten Strom des Wechselstromgenerators führen, d. h. den abfließenden und den zurückfließenden Strom. Hierbei kann es sich um die Ausgangsleitungen des Wechselstromgenerators, aber auch um irgendwelche anderen Leitungen in dem Wechselstromgenerator handeln.

### STAND DER TECHNIK

Die Normen VDE 0126 und VDE 0126-1-1 fordern, dass sich ein Wechselrichter in Abhängigkeit des Effektivwerts eines plötzlich auftretenden Differenzstroms über seine Netzanschlüsse binnen vorgegebener Abschaltzeiten vom Netz trennt. Wie bereits angesprochen wurde, setzt sich dieser Differenzstrom neben einem resistiven Fehlerstrom aus einem zusätzlichen kapazitiven Ableitstrom zusammen, die vektoriell zu dem Differenzstrom addiert werden. Den Vorgaben des normativen Prüfaufbaus und Prüfablaufs zur Erfüllung der genannten Normen ist zu entnehmen, dass allein ein sprunghafter Anstieg des Fehlerstroms - auch bei vorhandenem großem Ableitstrom - zur Trennung des Wechselrichters vom Netz führen muss. Der Differenzstrom wird regelmäßig mit einem Summenstromwandler gemessen, dessen Spannungssignal ein Maß für den Differenzstrom zwischen den Phasen und dem Nullleiter des Wechselrichters ist. Um die in den benannten Normen geforderte Detektion eines Sprungs des Fehlerstroms zu gewährleisten, muss der Fehlerstrom aus dem Differenzstrom bestimmt werden. Durch den Trend, trafolose Wechselrichter mit steigenden Leistungen und größeren Abmessungen der Photovoltaikanlagen zu entwickeln, erhöhen sich die Kapazitäten gegenüber Erde und damit die auftretenden Ableitströme. Durch Verwendung bestimmter Materialien für die Photovoltaikanlagen verstärkt sich diese Tendenz weiter. Zur ausreichend empfindlichen Erfassung eines Sprungs im Fehlerstrom muss daher zunächst der Ableitstrom von dem Differenzstrom separiert werden. Zudem wird die Detektion eines Sprungs im Fehlerstrom dadurch zunehmend erschwert, dass die Empfindlichkeit des Summenstromwandlers durch hohe Ableitströme grundsätzlich und damit auch für Fehlerströme stark reduziert ist.

Zur Separierung von Ableitströmen von dem Spannungssignal eines Summenstromwandlers ist es bekannt, alle sich langsam ändernden Ströme, die der Summenstromwandler misst, als Ableitströme zu definieren und durch eine Auswertungssoftware zu kompensieren. Auftretende Sprünge des Fehlerstroms können dann vektoriell berechnet werden und sind bis zur Auflösungsgrenze der Digitalisierung des Spannungssignals des Summenstromwandlers detektierbar. Bei dieser Vorgehensweise werden jedoch Sprünge im Ableitstrom falsch als Fehlerströme interpretiert. Darüber hinaus begrenzt die Auflösung der Digitalisierung den maximal zulässigen Ableitstrom, bei dem Fehlerstromsprünge noch erkannt werden.

Aus der EP 1 229 629 A2 ist es zur Bestimmung des Fehlerstromanteils eines Differenzstroms bekannt, den Differenzstrom über die Eingänge eines an eine Photovoltaikanlage angeschlossenen Wechselrichters mit Hilfe einer elektrischen Schaltung zu filtern. Speziell sollen Frequenzkomponenten des Wechselrichters mit typischen Frequenzen des durch den Betrieb des Wechselrichters hervorgerufenen Ableitstroms herausgefiltert werden, um den Differenzstrom von dem Ableitstrom zu bereinigen. Insbesondere bei der hierbei vorgenommenen Beschränkung auf zwei Hauptfrequenzen erweist sich dieses bekannte Verfahren in der Praxis jedoch als unzureichend, um den Ableitstromanteil des Differenzstroms effektiv zu unterdrücken.

Aus der EP 1 229 629 A2 sind weiterhin ein Verfahren und eine Vorrichtung zur Bestimmung des Fehlerstromanteils eines Differenzstroms mit den Merkmalen des Oberbegriffs des unabhängigen Patentanspruchs 1 bzw. des unabhängigen Patentanspruchs 13 bekannt. Aus Messungen der Spannungen zwischen den Eingangsleitungen des Wechselrichters und Erde, genauer gesagt des Wechselspannungsanteils dieser Spannungen, wird die treibende Kraft des in dem Differenzstrom enthaltenen Ableitstroms erfasst. Aus diesem Spannungssignal und den bekannten Ableitkapazitäten wird der Ableitstrom berechnet und von dem Differenzstrom abgezogen, um den Fehlerstrom zu bestimmen. Beispielsweise bei einer Photovoltaikanlage als Gleichstromquelle des Wechselstromgenerators sind die Ableitkapazitäten jedoch nicht konstant, sondern ändern sich unter anderem durch Niederschlag auf die Photovoltaikpanele. Es ist daher bei Verwendung einer konstanten Vorgabe für die Ableitkapazitäten nicht möglich, den aktuellen Ableitstrom aus den Spannungen der Eingangsleitung gegenüber Erde zu ermitteln.

Aus der DE 198 26 410 A1 sind ein Verfahren und eine Einrichtung zur Isolations- und Fehlerstromüberwachung in einem elektrischen Wechselstromnetz bekannt, bei denen ein durch vektorielle Addition gebildeter Differenzstrom zwischen zumindest zwei Netzleitern erfasst wird und wobei der Wechselstromanteil des Differenzstroms und der die Wirkleistung des Wechselstromanteils wiedergebende Phasenwinkel ϕ bestimmt werden. Eine Lastabschaltung erfolgt nicht nur dann, wenn der Differenzstrom einen bestimmten Ansprechwert übersteigt, sondern auch dann, wenn das Produkt zwischen der Amplitude des Wechselstromanteils des Differenzstroms und dem Kosinus des Phasenwinkels ϕ einen bestimmten Ansprechwert übersteigt. Eine praktische Anleitung, den gesamten Fehlerstromanteil des Differenzstroms auf einfache Weise zu erfassen, gibt dieses Dokument nicht.

### AUFGABE DER ERFINDUNG

Der Erfindung liegt die Aufgabe zugrunde, ein Verfahren und eine Vorrichtung zur Bestimmung des Fehlerstromanteils eines Differenzstroms mit den Merkmalen des Oberbegriffs des unabhängigen Patentanspruchs 1 bzw. des unabhängigen Patentanspruchs 13 aufzuzeigen, bei denen der Fehlerstromanteil des Differenzstroms unabhängig davon, wie groß eine Gleichstromkomponente und eine Wechselstromkomponente des Fehlerstroms sind und inwieweit die relevanten Ableitkapazitäten variieren, bestimmt, d. h. von dem Ableitstromanteil des Differenzstrom separiert wird.

### LÖSUNG

Die Aufgabe der Erfindung wird durch ein Verfahren zur Bestimmung des Fehlerstromanteils eines Differenzstroms mit den Merkmalen des unabhängigen Patentanspruchs 1 und durch eine Vorrichtung zur Bestimmung des Fehlerstromanteils eines Differenzstroms mit den Merkmalen des unabhängigen Patentanspruchs 13 gelöst. Bevorzugte Ausführungsform des neuen Verfahrens und der neuen Vorrichtung sind in den abhängigen Patentansprüchen definiert.

### BESCHREIBUNG DER ERFINDUNG

Bei der vorliegenden Erfindung wird das elektrische Signal, das aufgrund seiner Abhängigkeit von den Spannungen an dem Wechselstromgenerator gegenüber Erde die Frequenzverteilung der treibenden Kraft für den Ableitstromanteil des Differenzstroms widerspiegelt und das mit dem Ableitstromanteil des Differenzstroms in Phase ist, zur Berücksichtigung der aktuellen Größe der Ableitkapazitäten mit einem Skalierungsfaktor multipliziert, der fortlaufend nachgeführt wird, um den aktuellen Ableitstromanteil nachzubilden. Dabei erfolgt die Nachführung in solcher Weise, dass der Effektivwert des Differenzstroms nach Subtraktion des skalierten elektrischen Signals bei dem aktuellen Wert des Skalierungsfaktors ein Minimum aufweist. Eine Überkompensation, d. h. die Verwendung eines zu großen Skalierungsfaktors, der einem größeren als dem tatsächlichen Ableitstromanteil entspricht, führt dabei nach Subtraktion des skalierten elektrischen Signals ebenso zu einem gegenüber seinem Minimum erhöhten Effektivwert des Differenzstroms wie eine Unterkompensation, d. h. die Verwendung eines zu kleinen Skalierungsfaktors, der einem kleineren als dem tatsächlichen Ableitstromanteil entspricht. Anders gesagt wird das Minimum des Effektivwerts des Differenzstroms nach Subtraktion des skalierten elektrischen Signals genau dann erreicht, wenn der Skalierungsfaktor die aktuellen Ableitkapazitäten optimal berücksichtigt. Dies hat seine Grundlage darin, dass der Fehlerstromanteil des Differenzstroms eine andere Frequenz und/oder Phase als der Ableitstromanteil aufweist, und deshalb beim Subtrahieren des skalierten elektrischen Signals keine Gefahr besteht, Teile des Fehlerstromanteils auszublenden. Vielmehr bleibt der Fehlerstromanteil beim Subtrahieren des skalierten Signals immer erhalten, und der Effektivwert des Differenzstroms nach Subtraktion des skalierten elektrischen Signals ist nur von der Güte der Kompensation des Ableitstromanteils abhängig.

Die Formulierung, dass das elektrische Signal "mit einem Skalierungsfaktor multipliziert" wird, schließt insbesondere ein, dass es - analog oder digital - linear verstärkt wird, wobei der Verstärkungsfaktor dem Skalierungsfaktor entspricht. Die Formulierung schließt aber auch ein, dass das elektrische Signal nach einer Grundverstärkung bei seiner anschließenden Subtraktion mehrere Male von dem Differenzstrom abgezogen wird. Dann ergibt sich der Skalierungsfaktor aus dem Produkt des Verstärkungsfaktors und der Anzahl von Malen des Abziehens.

Die Formulierung, dass das skalierte elektrische Signal "von dem Differenzstrom subtrahiert" oder auch abgezogen wird, schließt jede Vorgehensweise ein, bei der der Differenzstrom oder ein ihm entsprechender Wert phasenrichtig um das mit dem Skalierungsfaktor gemäß voranstehender Definition multiplizierte elektrische Signal oder um einen diesem Signal entsprechenden Wert gemindert wird.

Bei der vorliegenden Erfindung ist es bevorzugt, wenn das elektrische Signal, das von den Spannungen gegenüber Erde abhängig und mit dem Ableitstromanteil des Differenzstroms in Phase ist und das die Grundlage für die Kompensation des Ableitstromanteils des Differenzstroms bildet, unmittelbar an dem Wechselstromgenerator abgegriffen wird. Es handelt sich also vorzugsweise nicht um ein Signal mit den erfindungsgemäßen Eigenschaften, das in Abhängigkeit von den Spannungen an dem Wechselstromgenerator künstlich generiert wird, sondern an dem Wechselstromgenerator selbst entsteht. Für das unmittelbare Entstehen des elektrischen Signals an dem Wechselstromgenerator kann es jedoch sinnvoll sein, besondere Voraussetzungen zu schaffen. Konkret kann das elektrische Signal von einem Ableitstrom generiert werden, den die Spannungen an dem Wechselstromgenerator durch Messkondensatoren nach Erde hervorrufen. Das elektrische Signal kann dabei der fließende Ableitstrom selbst sein. Dieser Ableitstrom ist ein Abbild des gesamten Ableitstromanteils an dem Differenzstrom, d. h. er weist dessen Phase und Frequenzverteilung auf, weil sich bei einer Parallelschaltung von Kondensatoren wie der Messkondensatoren zu der restlichen Ableitkapazität die fließenden Wechselströme bei allen Frequenzen phasengleich und proportional zu deren Kapazitäten auf die Kondensatoren aufteilen. Der Unterschied zwischen der kleinen Kapazität der Messkondensatoren und der viel größeren gesamten Ableitkapazität wird durch den Skalierungsfaktor für das elektrische Signal ausgeglichen, was einer elektronischen Verstärkung der Kapazität der Messkondensatoren entspricht. Bei erfindungsgemäßer Festlegung des Skalierungsfaktors für das elektrische Signal ist der mit diesem Skalierungsfaktor multiplizierte Ableitstrom durch die Messkondensatoren nach Erde genau der Ableitstromanteil des Differenzstroms.

Wenn in dem Wechselstromgenerator bereits aus anderen Gründen Kondensatoren vorhanden sind, über die ein geeigneter Ableitstrom nach Erde abfließt, können diese als die voranstehend erläuterten Messkondensatoren verwendet werden, so dass zur Verwirklichung der vorliegenden Erfindung keine zusätzlichen Messkondensatoren vorgesehen werden müssen.

Die vektorielle Subtraktion des skalierten elektrischen Signals von dem Differenzstrom kann in einfacher Weise dadurch erfolgen, dass es als Strom, z. B. in Form des skalierten Ableitstroms durch die Messkondensatoren, mit entgegengesetzter Flussrichtung durch einen den Differenzstrom erfassenden Summenstromwandler geleitet wird. Diese Vorgehensweise, die hier als "direkte Stromkompensation" bezeichnet wird, entspricht der Kompensation des Ableitstromanteils an dem Differenzstrom mit Hilfe eines um 180° phasenverschobenen Signals gleicher Frequenz und Amplitude.

Zwar bedeutet die Verwendung eines skalierten Ableitstroms zur Kompensation des Ableitstromanteils des Differenzstroms auch dann eine nicht unerhebliche Verlustleistung, wenn der Ableitstrom zur Realisation einer Grundskalierung mehrfach durch den Summenstromwandler geführt wird. Von Vorteil bei dieser direkten Stromkompensation ist jedoch, dass der Summenstromwandler unabhängig von der Größe des Ableitstromanteils des Differenzstroms, da dieser direkt kompensiert wird, immer im selben Arbeitspunkt betrieben wird, d. h. auch von großen Ableitstromanteilen an dem Differenzstrom unbeeinflusst bleibt.

Eine nur geringe Verlustleistung tritt bei der Realisierung der vorliegenden Erfindung hingegen dann auf, wenn als das elektrische Signal eine zu dem durch die Messkondensatoren fließenden Ableitstrom proportionale Spannung verwendet wird Diese Spannung kann nach ihrer Skalierung z. B. von einem Spannungssignal eines den Differenzstrom erfassenden Summenstromwandlers subtrahiert werden. Auch diese Vorgehensweise, die hier als "direkte Spannungskompensation" bezeichnet wird, entspricht der Kompensation des Ableitstromanteils an dem Differenzstrom durch ein um 180° phasenverschobenes Signal gleicher Frequenz und Amplitude. Wenn dabei als das elektrische Signal eine Spannung verwendet wird, die an einem Messwiderstand abfällt, der von dem durch die Messkondensatoren nach Erde abfließenden Ableitstrom durchflossen wird, versteht es sich, dass der mit den Messkondensatoren in Reihe geschaltete Widerstand nur klein sein darf, damit der über die Messkondensatoren abfließende Ableitstrom keine unerwünschte Frequenzfilterung erfährt, nach der er nicht mehr die Frequenzverteilung des Ableitstromanteils an dem Differenzstrom hätte. Ein kleiner Fehler in der Frequenzverteilung des Ableitstroms durch die Messkondensatoren gegenüber dem zu kompensierenden Ableitstromanteil erweist sich aber als unerheblich.

Die direkte Spannungskompensation vor einer Digitalisierung des Differenzstroms bzw. dessen Fehlerstromanteils hat den Vorteil, dass die Auflösung der Digitalisierung ganz auf den Fehlerstrom abgestimmt sein kann. Grundsätzlich ist es aber auch möglich, das elektrische Signal nach seiner Skalierung oder auch schon vorher zu digitalisieren und das digitalisierte skalierte elektrische Signal von dem digitalisierten Differenzstrom zu subtrahieren. Hierdurch kann der Hardware-Aufwand für die Umsetzung der vorliegenden Erfindung reduziert werden. Eine gleiche Leistungsfähigkeit erfordert dabei jedoch eine höhere Auflösung des bzw. der eingesetzten Analog/Digital-Wandler.

Es versteht sich, dass das erfindungsgemäß skalierte elektrische Signal nicht nur dazu in der Lage ist, den Ableitstromanteil an dem Differenzstrom zu kompensieren, sondern auch unmittelbar den aktuellen Ableitstrom dokumentiert.

In seiner einfachsten Ausführungsform des erfindungsgemäßen Verfahrens wird das elektrische Signal als Sinussignal mit mindestens einer Hauptfrequenz der Spannungen an dem Wechselstromgenerator gegenüber Erde generiert. Dieses Sinussignal wird dann mit dem Skalierungsfaktor multipliziert, um seine Amplitude nach dem erfindungsgemäßen Kriterium, dass der Effektivwert des Differenzstroms nach Subtraktion des skalierten elektrischen Signals bei dem aktuellen Wert des Skalierungsfaktors ein Minimum aufweist, an die Amplitude des Ableitstromanteils des Differenzstroms bei dieser Frequenz anzupassen.

Um sicherzustellen, dass das Sinussignal nicht nur über deren Hauptfrequenzen von den Spannungen an dem Wechselstromgenerator gegenüber Erde abhängig sondern auch mit dem Ableitstromanteil des Differenzstroms in Phase ist, kann auch die Phase des Sinussignals bei jeder Hauptfrequenz der Spannungen an dem Wechselstromgenerator (1) gegenüber Erde (PE) auf einen Wert eingestellt werden, bei dem der Betrag des Differenzstroms nach Subtraktion des skalierten elektrischen Signals ein Minimum annimmt. Die Notwendigkeit einer solchen Phasenanpassung besteht jedoch in aller Regel nur einmal. d. h. nicht fortlaufend, wie die Anpassung des Skalierungsfaktors notwendig ist. Darüber hinaus entfällt die Notwendigkeit einer solchen Anpassung der Phase des elektrischen Signals bei allen Ausführungsformen des erfindungsgemäßen Verfahrens, bei denen das elektrische Signal von einem Ableitstrom generiert wird, den die Spannungen an dem Wechselstromgenerator durch Messkondensatoren nach Erde hervorrufen. Dieser Ableitstrom ist, wie bereits angemerkt wurde, ein frequenz- und phasentreues Abbild des Ableitstromanteils des Differenzstroms, das nur noch bezüglich seiner Amplitude skaliert werden muss, um den Ableitstromanteil des Differenzstroms, d. h. den gesamten Ableitstrom des Wechselstromgenerators wiederzugeben.

Die erfindungsgemäße fortlaufende Nachführung des Skalierungsfaktors kann mittels eines Trackingverfahrens durchgeführt werden. Dabei wird der Skalierungsfaktor in kleinen Schritten variiert, und die damit eintretenden Änderungen des Effektivwerts des Differenzstroms, von dem das skalierte elektrische Signal subtrahiert wurde, werden beobachtet. Wenn der Effektivwert sinkt, wird der Skalierungsfaktor in derselben Richtung nochmals geändert und erneut geprüft, welchen Einfluss dies auf den Effektivwert des Differenzstroms hat. In dieser Richtung wird solange fortgefahren, bis der Effektivwert ansteigt. Dann kann die testweise vorgenommene Änderung des Skalierungsfaktors verworfen werden. Zumindest wird die Richtung der Änderung des Skalierungsfaktors umgekehrt. Wenn mit dem Skalierungsfaktor das Minimum des effektiven Differenzstroms gefunden ist, bleibt der Skalierungsfaktor so konstant oder schwankt nur minimal. Es versteht sich, dass ein solches Trackingverfahren sowohl bezüglich der zeitlichen Abfolge der Trackingschritte als auch der Weite der Trackingschritte einstellbar und auf diese Weise optimierbar ist. Als günstig erweist sich, dass ein auftretender Fehlerstrom den Effektivwert des Differenzstroms unabhängig von der Richtung der Variation des Skalierungsfaktors ansteigen lässt und den Skalierungsfaktor insoweit einfriert. Das Trackingverfahren stört damit die sensible Erkennung eines Fehlerstroms nicht. Dennoch ist es ohne Weiteres möglich, das Trackingverfahren mit so schnell aufeinanderfolgenden ausreichend großen Schritten durchzuführen, dass alle realen Änderungen der Ableitkapazitäten des Wechselstromgenerators ausreichend schnell abgebildet werden, um nicht fehlerhafterweise auf das Auftreten eines Fehlerstroms zu schließen.

Bei dem neuen Verfahren ist es bevorzugt, wenn die Erfassung des Differenzstroms, wie es bei der Überwachung von Wechselstromgeneratoren mit einem Wechselrichter üblich ist, über den Ausgängen des Wechselrichters des Wechselstromgenerators erfolgt, während die Spannungen berücksichtigt werden, die an den Eingängen des Wechselrichters gegenüber Erde auftreten. Dies bedeutet, dass die erfindungsgemäßen Messkondensatoren zur Generierung eines Ableitstroms als Grundlage für das elektrische Signal zur Kompensation des Ableitstromanteils des Differenzstroms vorzugsweise an die Eingangsleitungen des Wechselrichters angeschlossen werden.

Die erfindungsgemäße Vorrichtung weist eine Skalierungseinrichtung auf, die das elektrische Signal vor dem Subtrahieren von dem Differenzstrom mit dem Skalierungsfaktor multipliziert, wobei sie den Skalierungsfaktor für das elektrische Signal fortlaufend in solcher Weise nachführt, dass der Effektivwert des Differenzstroms nach Subtraktion des skalierten elektrischen Signals bei dem aktuellen Wert des Skalierungsfaktors ein Minimum aufweist. An dieser Stelle sei angemerkt, dass es für die erfindungsgemäße Vorrichtung ebenso wie für das erfindungsgemäße Verfahren ausreicht, wenn der Wert des Skalierungsfaktors das entsprechende Minimum des Effektivwerts des Differenzstroms im Wesentlichen trifft. So sind Abweichungen selbst von einigen Schritten eines Trackingverfahrens zum Nachführen des Skalierungsfaktors unerheblich, weil bei ausreichend kleinen Trackingschritten der verbleibende Fehler nur gering bleibt, zumal der dem aktuellen absolutem Minimum des Effektivwerts des Differenzstroms exakt entsprechende Skalierungsfaktor sowieso schwankt.

Bezüglich weiterer Besonderheiten der erfindungsgemäßen Vorrichtung wird auf die Beschreibung des erfindungsgemäßen Verfahrens verwiesen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand von Ausführungsbeispielen unter Bezugnahme auf die beigefügten Zeichnungen näher erläutert und beschrieben.
- **Fig. 1**: zeigt einen Wechselstromgenerator mit einer Photovoltaikanlage und einem Wechselrichter, wobei die Ursachen für einen über die Ausgänge des Wechselrichters auftretenden Differenzstrom skizziert sind.
- **Fig. 2**: illustriert die vektorielle Zusammensetzung des Differenzstroms aus einem Fehlerstrom und einem Ableitstrom.
- **Fig. 3**: erläutert eine erste Ausführungsform des erfindungsgemäßen Verfahrens, bei der eine direkte Stromkompensation des Ableitstromanteils des Differenzstroms an einem Summenstromwandler erfolgt.
- **Fig. 4**: erläutert eine Ausführungsform des erfindungsgemäßen Verfahrens, bei dem eine direkte Spannungskompensation einer von dem Ableitstromanteil des Differenzstroms in einem Summenstromwandler hervorgerufenen Spannung erfolgt.
- **Fig. 5**: erläutert eine softwaregestützte Kompensation des Ableitstromanteils des Differenzstroms.
- **Fig. 6**: erläutert die Kompensation des Ableitstromanteils des Differenzstroms mit einem Sinussignal; und
- **Fig. 7**: skizziert ein Trackingverfahren zum fortlaufenden Nachführen eines Skalierungsfaktors für ein elektrisches Signal zur Durchführung der verschiedenen erfindungsgemäßen Kompensationen des Ableitstromanteils des Differenzstroms.

### FIGURENBESCHREIBUNG

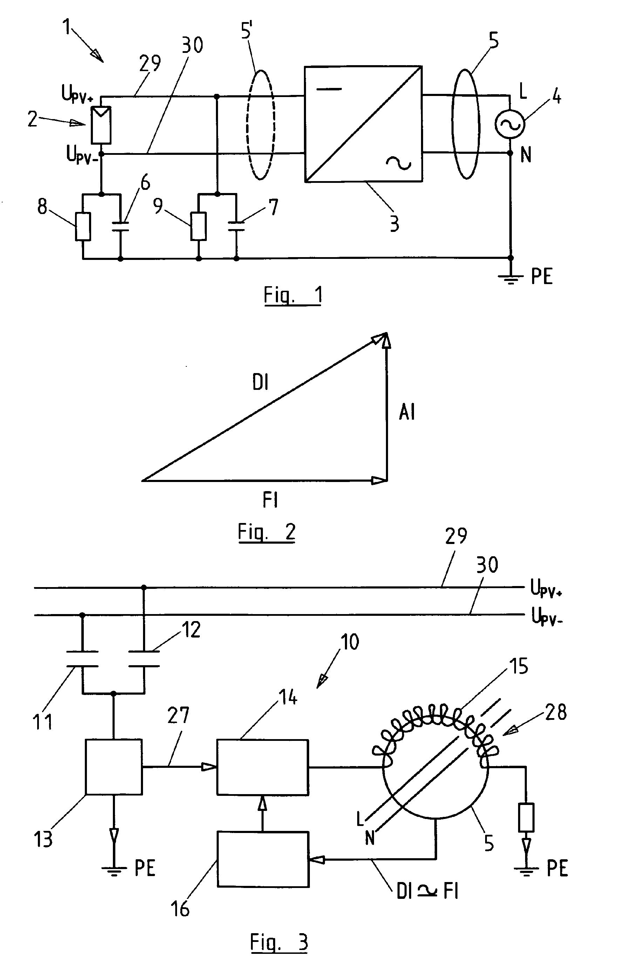

Der in **Fig. 1** skizzierte Wechselstromgenerator 1 weist als Gleichstromquelle eine Photovoltaikanlage 2 und einen den Gleichstrom der Photovoltaikanlage 2 in einen Wechselstrom umrichtenden Wechselrichter 3 auf. Der Wechselstromgenerator 1 speist über den Wechselrichter 3 Strom in ein Wechselstromnetz 4 ein. Dabei wird ein über die Ausgänge des hier einphasigen Wechselrichters 3, d. h. über die Phase L und den Nullleiter N, auftretender Differenzstrom mit einem Stromsummenwandler 5 erfasst. Alternativ könnte der Differenzstrom auch über die Eingangsleitungen 29 und 30 des Wechselrichters 3, an denen die Ausgangsspannungen U_{PV+} und U_{PV-} der Photovoltaikanlage 2 anliegen, erfasst werden, wie durch einen weiteren gestrichelt dargestellten Stromsummenwandler 5' angedeutet ist. Ein solcher Differenzstrom hat im Wesentlichen zwei Ursachen. Zum einen einen Ableitstrom, der auf Ableitkapazitäten 6 und 7 der Photovoltaikanlage 2 gegenüber Erde beruht, die in Fig. 1 zwischen den Eingängen des Wechselrichters 3 für U_{PV+} und U_{PV-} und dem Erdpotential PE angedeutet sind. Hinzu kommt ein Fehlerstromanteil des Differenzstroms, der in Fig. 1 durch Widerstände 8 und 9 zwischen den Eingängen des Wechselrichters 3 und Erdpotential PE angeordnet sind, die für die Isolationswiderstände dieser Eingänge stehen. Bei intakter Isolation sind die Widerstände 8 und 9 sehr groß, und entsprechend ist der Fehlerstromanteil des Differenzstroms klein. Mit einem Isolationsfehler ist ein Anstieg des Fehlerstromanteils des Differenzstroms verbunden. Einen solchen Anstieg gilt es zu erkennen, weil ein jeder Isolationsfehler eine Gefahrenquelle darstellt. Die Erkennung des Anstiegs des Fehlerstromanteils des Differenzstroms muss auch dann zuverlässig erfolgen, wenn er in der Anwesenheit eines hohen Ableitstromanteils des Differenzstroms erfolgt, der auf keinen Fehlerzustand hinweist.

**Fig. 2** skizziert die Zusammensetzung des Differenzstroms DI aus dem Fehlerstromanteil FI und dem Ableitstromanteil AI, wobei sich der Fehlerstromanteil FI und der Ableitstromanteil AI vektoriell zu dem Differenzstrom DI addieren, da der Fehlerstromanteil FI ein resistiver Strom und der Ableitstromanteil AI ein kapazitiver Strom ist. Aus Fig. 2 ergibt sich, dass mit zunehmendem Ableitstromanteil AI eine Zunahme des Fehlerstromanteils FI um einen bestimmten Betrag eine kleiner werdende Auswirkung auf den Betrag des Differenzstroms DI und damit auf dessen Effektivwert hat. Es ist daher von Interesse, zur Beobachtung des Fehlerstromanteils FI den Ableitstromanteil AI von dem Differenzstrom DI zu separieren oder bei dem Differenzstrom DI zu kompensieren.

Diesem Zweck dient die in **Fig. 3** skizzierte Vorrichtung 10 zur Bestimmung des Fehlerstromanteils des Differenzstroms. Den Kapazitäten 6 und 7 gemäß Fig. 1 sind Messkondensatoren 11 und 12 parallelgeschaltet und ein über diese Kondensatoren 11 und 12 nach Erde (Erdpotential) PE abfließender Strom wird mit einer Strommesseinrichtung 13 gemessen. Der Strommesswert wird in einer Skalierungseinrichtung 14 durch Multiplikation mit einem Skalierungsfaktor multipliziert, um zu berücksichtigen, dass die Messkondensatoren 11 und 12 nur einen Bruchteil der gesamten Ableitkapazitäten der Photovoltaikanlage 2 gemäß Fig. 1 repräsentieren und so nur ein Bruchteil des gesamten Ableitstromanteils AI über sie fließt. Der verstärkte Strom wird dann in Gegenrichtung zu den Leitern L und N durch den Stromsummenwandler 5 geführt, so dass er unmittelbar von dem Differenzstrom zwischen dem L-Leiter und dem Nullleiter abgezogen wird. Die mehreren Windungen um den Summenstromwandler 5 des den verstärkten Strom führenden Leiters 15 bewirken dabei eine Aufwärtsskalierung des verstärkten Stroms, die in den wirksamen Skalierungsfaktor eines skalierten elektrischen Signals 28 eingeht. Der verstärkte Strom fließt letztlich über einen Widerstand nach Erdpotential PE ab. Der von dem Summenstromwandler 5 erfasste Differenzstrom DI ist von dem Ableitstromanteil AI im Wesentlichen befreit und entspricht daher seinem Fehlerstromanteil FI. Dies gilt aber nur dann, wenn der Skalierungsfaktor, mit dem die Skalierungseinrichtung 14 den Ableitstrom multipliziert, der von der Strommesseinrichtung 13 gemessen wird, der aktuellen Größe der Ableitkapazitäten entsprechend richtig festlegt. Bei dieser richtigen Festlegung des Skalierungsfaktors weist der von dem Summenstromwandler 5 erfasste Differenzstrom ein Minimum seines Effektivwerts auf. Entsprechend verändert eine Logik 16 den Skalierungsfaktor fortlaufend so, dass der Effektivwert des Differenzstroms ein Minimum annimmt. Auf diese Weise werden auch jegliche Änderungen der Ableitkapazitäten der Photovoltaikanlage 2 gemäß Fig. 1 beispielsweise aufgrund von Niederschlag, Alterung oder dergleichen automatisch kompensiert.

In Abwandlung zu Vorrichtung 10 gemäß Fig. 3 kann die Skalierungsvorrichtung 14 auch direkt den über die Messkondensatoren 11 und 12 nach Erdpotential PE abfließenden Ableitstrom verstärken und dann dem Summenstromwandler 5 zuführen.

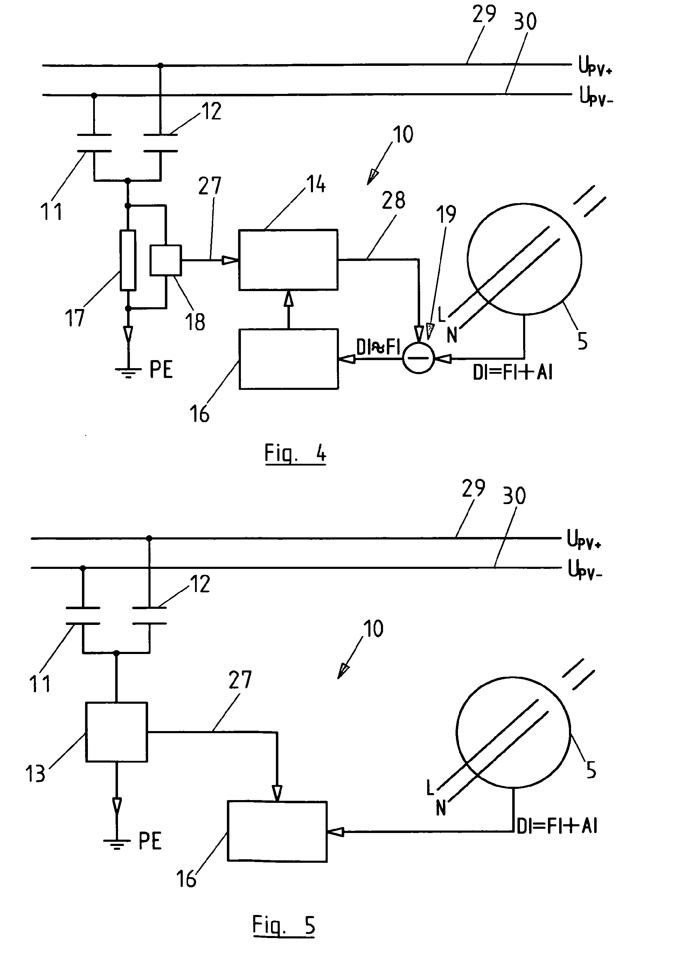

Während gemäß Fig. 3 eine direkte Kompensation des Ableitstromanteils AI des Differenzstroms DI durch einen Strom durch den Summenstromwandler 5 erfolgt, erfolgt gemäß **Fig. 4** eine Kompensation des Ableitstromanteils AI durch eine Spannung. Diese ist hier dadurch realisiert, dass die aufgrund des durch die Messkondensatoren 11 und 12 nach Erdpotential abfließenden Ableitstroms über einem Messwiderstand 17 abfallende Spannung mit einer Spannungsmesseinrichtung 18 erfasst wird. Diese Spannung wird von der Skaliereinrichtung 14 mit dem Skalierungsfaktor multipliziert und dann als skaliertes elektrisches Signal 28 in einem Subtraktionsknoten 19 von dem Spannungssignal des Summenstromwandlers 5 subtrahiert. Auch in diesem Fall gelangt zu der Logik 16 bei optimal eingestelltem Skalierungsfaktor nur der Fehlerstromanteil FI des Differenzstroms DI; und durch Minimierung des Effektivwerts dieses auf den Fehlerstromanteil FI reduzierten Differenzstroms DI kann die Einstellung des Skalierungsfaktors optimiert werden.

Gemäß **Fig. 5** wird das Signal der Strommesseinrichtung 13 direkt der Logik 16 zugeführt, die es digitalisiert und in geeigneter Weise skaliert, um es von dem digitalisierten Signal des Summenstromwandlers 5 zu subtrahieren. Auch hierbei wird der Skalierungsfaktor so gewählt, dass der Effektivwert des verbleibenden Differenzstroms DI, der seinem Fehlerstromanteil FI entspricht, ein Minimum annimmt.

Der Vorteil der Ausführungsformen der Vorrichtung 10 gemäß den Fig. 3 bis 5 liegt darin, dass durch den Ableitstrom durch die Messkondensatoren 11 und 12 gegen Erdpotential oder die hiervon hervorgerufen Spannungen ein elektrisches Signal zur Verfügung steht, das dieselbe Phase und Frequenzverteilung aufweist wie der Ableitstromanteil AI des Differenzstroms DI. Der Ableitstrom durch die Messkondensatoren 11 und 12 unterscheidet sich von dem Ableitstromanteil AI des Differenzstroms DI nur hinsichtlich seiner Amplitude. Diese kann aber mit Hilfe des Skalierungsfaktors angepasst werden, der dem Kriterium der Minimierung des Effektivwerts des Differenzstroms DI nach Subtraktion des skalierten Ableitstroms genügt. Dies gilt unabhängig davon, welche Frequenzanteile der Ableitstrom bei der aktuellen Betriebsweise des Wechselrichters 3 gemäß Fig. 1 oder aufgrund anderer Einflussfaktoren aufweist.

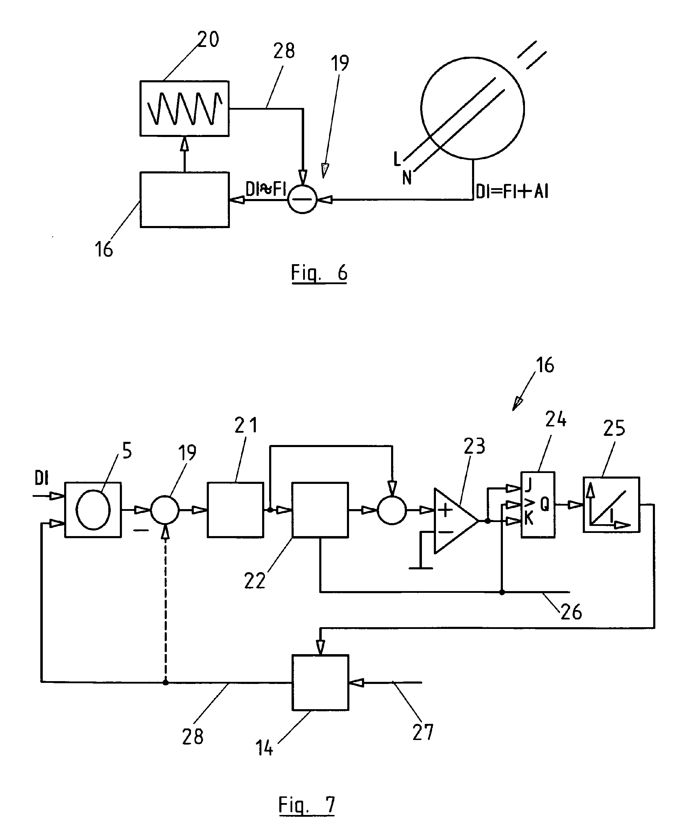

**Fig. 6** skizziert die Kompensation nur einer Hauptkomponente des Ableitstromanteils AI an dem Differenzstrom DI mittels eines von einem Sinusgenerator 20 mit einer Hauptfrequenz des Ableitstroms generierten Sinussignals. Dabei betreibt die Logik 16 eine Minimierung des Effektivwerts des nach dem Subtraktionsknoten 19 verbleibenden Differenzstroms DI sowohl durch Anpassung der Amplitude als auch der Phase des Sinussignals. Wenn der Ableitstrom im Wesentlichen eine Frequenz aufweist kann auch auf diese Weise der Ableitstromanteil AI an dem Differenzstrom DI in sinnvoller Weise reduziert werden.

**Fig. 7** skizziert ein Trackingverfahren zur Festlegung des optimalen Skalierungsfaktors, bei dem der Effektivwert des Differenzstroms DI ein Minimum annimmt. Dabei ist mit durchgezogener Linie zwischen der Skalierungseinrichtung 14 und dem Summenstromwandler 5 der Fall der direkten Stromkompensation (gemäß Fig. 3) und mit gestrichelter Linie zu dem Subtraktionsknoten 19 der Fall der direkten Spannungskompensation (gemäß Fig. 4) angedeutet. Die Logik 16 umfasst hier zunächst einen Effektivwertbildner 21, an dessen Ausgang eine Sample&Hold-Stufe 22 angeschlossen ist. Diese Sample&Hold-Stufe 22 erlaubt es, den aktuellen Effektivwert des Differenzstroms DI mit einem früheren Effektivwert zu vergleichen. Ist die Effektivwertänderung negativ, d. h. wird eine Abnahme des Effektivwerts des Differenzstroms beobachtet, nähert sich das Trackingverfahren dem minimalen Effektivwert des Differenzstroms, und der die Amplitude des rückgekoppelten Kompensationssignals bestimmende Integrator 25 behält seine Richtung bei. Ist die von dem Komparator 23 festgestellte Effektivwertänderung positiv, d. h. hat sich der Effektivwert im Vergleich zu dem älteren Effektivwert vergrößert, entfernt sich das Trackingverfahren von dem gewünschten Minimum. Um dieser Tendenz entgegenzuwirken wird die Integrationsrichtung des Integrators 25 durch Umschalten eines JK-Flipflops 24 geändert. Ein zuvor größer gewordener Skalierungsfaktor wird kleiner, ein zuvor kleiner gewordener Skalierungsfaktor größer. Im eingeschwungenen Zustand pendelt der Skalierungsfaktor in engen Grenzen, so dass der von ihm abhängige Effektivwert des Differenzstroms um sein Minimum pendelt. Um das Zeitverhalten des Trackingverfahrens gemäß Fig. 7 festzulegen, können die folgenden Parameter angepasst werden:
a) Die Zeitkonstante der Effektivwertbildung in dem Effektivwertbildner 21;
b) ein Takt 26, der der Sample&Hold-Stufe 22 und dem JK-Flipflop 24 zugeführt wird, und
c) eine Integratorzeitkonstante des Integrators 25,

wobei diese Parameter zusammen die Trackingschrittfrequenz und die Trackingschrittweite des Trackingverfahrens bestimmen.

### BEZUGSZEICHENLISTE

- 1: Wechselstromgenerator
- 2: Photovoltaikanlage
- 3: Wechselrichter
- 4: Netz
- 5: Summenstromwandler
- 6: Ableitkapazität
- 7: Ableitkapazität
- 8: Isolationswiderstand
- 9: Isolationswiderstand
- 10: Vorrichtung
- 11: Messkondensator
- 12: Messkondensator
- 13: Strommesseinrichtung
- 14: Skalierungseinrichtung
- 15: Leiter
- 16: Logik
- 17: Messwiderstand
- 18: Spannungsmesseinrichtung
- 19: Subtraktionsknoten
- 20: Sinusgenerator
- 21: Effektivwertbildner
- 22: Sample&Hold-Stufe
- 23: Komparator
- 24: JK-Flipflop
- 25: Integrator
- 26: Takt
- 27: elektrisches Signal
- 28: skaliertes elektrisches Signal
- 29: Eingangsleitung
- 30: Eingangsleitung
- DI: Differenzstrom
- AI: Ableitstromanteil
- FI: Fehlerstromanteil
- U_{PV+}: positive Ausgangsspannung
- U_{PV}-: negative Ausgangsspannung
- PE: Erdpotential
- L: Phase
- N: Nullleiter

## Patentansprüche

1. Verfahren zur Bestimmung eines Fehlerstromanteils (FI) eines Differenzstroms (DI), wobei der Differenzstrom (DI) als Stromsumme über den Strom eines Wechselstromgenerators (1) führende Leitungen (L, N; 29, 30) erfasst wird, wobei ein elektrisches Signal (27), das von Spannungen an dem Wechselstromgenerator (1) gegenüber Erde (PE) abhängig und mit einem Ableitstromanteil (AI) des Differenzstroms (DI) in Phase ist, generiert und von dem Differenzstrom (DI) subtrahiert wird, **dadurch gekennzeichnet, dass** das elektrische Signal (27) vor dem Subtrahieren von dem Differenzstrom (DI) mit einem Skalierungsfaktor multipliziert wird, wobei der Skalierungsfaktor fortlaufend in solcher Weise nachgeführt wird, dass der Effektivwert des Differenzstroms (DI) nach Subtraktion des skalierten elektrischen Signals (28) bei dem aktuellen Wert des Skalierungsfaktors ein Minimum aufweist.

2. Verfahren nach Anspruch 1, **dadurch gekennzeichnet, dass** das von den Spannungen gegenüber Erde (PE) abhängige elektrische Signal (27) an dem Wechselstromgenerator (1) abgegriffen wird.

3. Verfahren nach Anspruch 2, **dadurch gekennzeichnet, dass** das elektrische Signal (27) von einem Ableitstrom generiert wird, den die Spannungen an dem Wechselstromgenerator (1) durch Messkondensatoren (11, 12) nach Erde (PE) hervorrufen.

4. Verfahren nach Anspruch 3, **dadurch gekennzeichnet, dass** das elektrische Signal (27) der fließende Ableitstrom ist.

5. Verfahren nach mindestens einem der vorhergehenden Ansprüche 1 bis 4, **dadurch gekennzeichnet, dass** das skalierte elektrische Signal (28) mit einem den Differenzstrom (DI) erfassenden Summenstromwandler (5) von dem Differenzstrom (DI) subtrahiert wird.

6. Verfahren nach Anspruch 3, **dadurch gekennzeichnet, dass** das elektrische Signal (27) eine zu dem fließenden Ableitstrom proportionale Spannung ist.

7. Verfahren nach Anspruch 6, **dadurch gekennzeichnet, dass** das skalierte elektrische Signal (28) von einem Spannungssignal eines den Differenzstrom (DI) erfassenden Summenstromwandlers (5) subtrahiert wird.

8. Verfahren nach mindestens einem der vorhergehenden Ansprüche 1 bis 4, 6 und 7, **dadurch gekennzeichnet, dass** das elektrische Signal (27) vor oder nach der Multiplikation mit dem Skalierungsfaktor digitalisiert wird und das digitalisierte skalierte elektrische Signal (28) von dem digitalisierten Differenzstrom (DI) subtrahiert wird.

9. Verfahren nach Anspruch 1, **dadurch gekennzeichnet, dass** das elektrische Signal (27) als Sinussignal mit mindestens einer Hauptfrequenz der Spannungen an dem Wechselstromgenerator (1) gegenüber Erde (PE) generiert wird, wobei optional die Phase des Sinussignals bei jeder Hauptfrequenz der Spannungen an dem Wechselstromgenerator (1) gegenüber Erde (PE) auf einen Wert eingestellt wird, bei dem der Effektivwert des Differenzstroms (DI) nach Subtraktion des skalierten elektrischen Signals (28) ein Minimum annimmt.

10. Verfahren nach mindestens einem der vorhergehenden Ansprüche, **dadurch gekennzeichnet, dass** Änderungen einer Ableitkapazität (6, 7) des Wechselstromgenerators (1) abgebildet werden.

11. Verfahren nach mindestens einem der vorhergehenden Ansprüche, **dadurch gekennzeichnet, dass** der Skalierungsfaktor fortlaufend nach einem Trackingverfahren nachgeführt wird.

12. Verfahren nach mindestens einem der vorhergehenden Ansprüche, **dadurch gekennzeichnet, dass** die Spannungen an dem Wechselstromgenerator (1) gegenüber Erde (PE) vor und der Differenzstrom (DI) nach einem Wechselrichter (3) des Wechselstromgenerators (1) berücksichtigt werden.

13. Vorrichtung (10) zur Bestimmung des Fehlerstromanteils (FI) eines Differenzstroms (DI), mit einem Stromsummenwandler (5), der den Differenzstrom (DI) als Stromsumme über alle den Strom eines Wechselstromgenerators (1) führende Leitungen (L, N) erfasst, mit einer Kompensationseinrichtung, die ein elektrisches Signal (27), das von Spannungen an dem Wechselstromgenerator (1) gegenüber Erde (PE) abhängig und mit einem Ableitstromanteil (AI) des Differenzstroms (DI) in Phase ist, generiert und von dem Differenzstrom (DI) subtrahiert, **dadurch gekennzeichnet, dass** die Kompensationseinrichtung eine Skalierungseinrichtung (14) aufweist, die das elektrische Signal (27) vor dem Subtrahieren von dem Differenzstrom (DI) mit einem Skalierungsfaktor multipliziert, wobei sie den Skalierungsfaktor fortlaufend in solcher Weise nachführt, dass der Effektivwert des Differenzstroms (DI) nach Subtraktion des skalierten elektrischen Signals (28) bei dem aktuellen Wert des Skalierungsfaktors ein Minimum aufweist.

14. Vorrichtung nach Anspruch 13, **dadurch gekennzeichnet, dass** Messkondensatoren (11 und 12) zwischen dem Wechselstromgenerator (1) und Erde (PE) vorgesehen sind.

15. Vorrichtung nach Anspruch 14, **dadurch gekennzeichnet, dass** die Skalierungseinrichtung (14) eine Spannung skaliert, die an einem Messwiderstand (17) abfällt, welcher von einem über die Messkondensatoren (11 und 12) nach Erde (PE) abfließenden Ableitstrom durchflossen wird, und dass die Kompensationseinrichtung die skalierte Spannung von einem Spannungssignal des Summenstromwandlers (5) subtrahiert.

## Claims

1. Method of determining a fault current part (FI) of a differential current (DI), wherein the differential current (DI) is determined as a current sum over lines (L, N; 29, 30) leading a current of an AC current generator (1), wherein a an electrical signal (27) is generated, which depends on voltages with regard to electric earth (PE) present at the AC current generator (1) and which is in phase with a stray current part (AI) of the differential current (DI) and that is subtracted from the differential current (DI), **characterized in that** the electrical signal (27) is multiplied by a scaling factor before being subtracted from the differential current (DI), wherein the scaling factor is continuously updated such that the effective value of the differential current (DI) after subtraction of the scaled electrical signal (28) reaches a minimum at the present value of the scaling factor.

2. Method of claim 1, **characterized in that** the electrical signal (27) depending on voltages with regard to electric earth (PE) is tapped at the AC current generator (1).

3. Method of claim 2, **characterized in that** the electrical signal (27) is generated by a stray current that is induced by the voltages present at the AC current generator (1) and that is flowing through measurement capacitors (11, 12) towards electric earth (PE).

4. Method of claim 3, **characterized in that** the electrical signal (27) is the flowing stray current.

5. Method of at least one of the preceding claims 1 to 4, **characterized in that** the scaled electrical signal (28) is subtracted from the differential current (DI) by means of a summation current transformer (5) measuring the differential current (DI).

6. Method of claim 3, **characterized in that** the electrical signal (27) is a voltage proportional to the flowing stray current.

7. Method of claim 6, **characterized in that** wherein the scaled electrical signal (28) is subtracted from a voltage signal of a summation current transformer (5) measuring the differential current (DI).

8. Method of at least one of the preceding claims 1 to 4, 6 and 7, **characterized in that** the electrical signal (27) is digitized prior to or after its multiplication by the scaling factor and the digitized scaled electrical signal (28) is subtracted from the digitized differential current (DI).

9. Method of claim 1, **characterized in that** the electrical signal (27) is generated as a sine signal having at least one main frequency of the voltages with regard to earth (PE) present at the AC current generator (1), wherein optionally the phase of the sine signal is adjusted to a value so that the effective value of the differential current (DI) after subtraction of the scaled electrical signal (28) reaches a minimum for each main frequency of the voltages with regard to earth (PE) present at the AC current generator (1).

10. Method of at least one of the preceding claims, **characterized in that** changes of a stray capacitance (6, 7) of the AC current generator (1) being mapped.

11. Method of at least one of the preceding claims, **characterized in that** the scaling factor is continuously updated according to a tracking procedure.

12. Method of at least one of the preceding claims, **characterized in that** the voltages with regard to earth (PE) present at the AC current generator (1) are considered upstream of an inverter (3) of the AC current generator (1) whereas the differential current (DI) is considered downstream of the inverter (3) of the AC current generator (1).

13. Apparatus (10) for determining a fault current part (FI) of a differential current (DI), comprising a summation current transformer (5) which measures the differential current (DI) as a current sum over all lines (L, N) leading the current of an AC current generator (1) and a compensation unit which generates an electrical signal (27) depending on voltages with regard to electric earth (PE) present at the AC current generator (1) being in phase with a stray current part (AI) of the differential current (DI) and subtracts it from differential current (DI), **characterized in that** the compensation unit comprises a scaling device (14) which multiplies the electrical signal (27) by a scaling factor prior to subtracting it from the differential current (DI), wherein the compensation unit continuously updates the scaling factor such that the effective value of the differential current (DI) after subtraction of the scaled electrical signal (28) reaches a minimum at the present value of the scaling factor.

14. Apparatus of claim 13, **characterized in that** measurement capacitors (11 and 12) are connected between the AC current generator (1) and electric earth (PE).

15. Apparatus of claim 14, **characterized in** the scaling device (14) scaling a voltage which drops over the measurement resistor (17) through which a stray current through the measurement capacitors (11 and 12) flows towards electric earth and the compensation unit subtracting the scaled voltage from a voltage signal of the summation current transformer (5).

## Revendications

1. Procédé destiné à déterminer une part de courant différentiel résiduel (FI) d'un courant différentiel (DI), le courant différentiel (DI) étant détecté en tant que courant total via des conduits (L, N ; 29, 30) de passage du courant d'un générateur de courant alternatif (1), un signal électrique (27) qui dépend de tensions sur le générateur de courant alternatif (1) par rapport à la terre (PE) et qui est en phase avec une part de courant de fuite (AI) du courant différentiel (DI) étant généré et soustrait du courant différentiel (DI), **caractérisé en ce qu'**avant d'être soustrait du courant différentiel (DI), le signal électrique (27) est multiplié par un facteur de mise à l'échelle, le facteur de mise à l'échelle étant suivi en continu de manière telle, qu'après la soustraction du signal électrique (28) mis à l'échelle, à la valeur actuelle du facteur de mise à l'échelle, la valeur effective du courant différentiel (DI) présente un minimum.

2. Procédé selon la revendication 1, **caractérisé en ce que** le signal électrique (27) dépendant des tensions par rapport à la terre (PE) est prélevé sur le générateur de courant alternatif (1).

3. Procédé selon la revendication 2, **caractérisé en ce que** le signal électrique (27) est généré par un courant de fuite que produisent les tensions sur le générateur de courant alternatif (1) par des condensateurs de mesure (11, 12) vers la terre (PE).

4. Procédé selon la revendication 3, **caractérisé en ce que** le signal électrique (27) est le courant de fuite circulant.

5. Procédé selon au moins l'une quelconque des revendications 1 à 4 précédentes, **caractérisé en ce que** le signal électrique (28) mis à l'échelle est soustrait du courant différentiel (DI) avec un transformateur (5) de courant total détectant le courant différentiel (DI).

6. Procédé selon la revendication 3, **caractérisé en ce que** le signal électrique (27) est une tension proportionnelle au courant de fuite circulant.

7. Procédé selon la revendication 6, **caractérisé en ce que** le signal électrique (28) mis à l'échelle est soustrait d'un signal de tension d'un transformateur (5) de courant total détectant le courant différentiel (DI).

8. Procédé selon au moins l'une quelconque des revendications 1 à 4, 6 et 7 précédentes, **caractérisé en ce que** le signal électrique (27) est numérisé avant ou après la multiplication par le facteur de mise à l'échelle et **en ce que** le signal électrique (28) mis à l'échelle numérisé est soustrait du courant différentiel (DI) numérisé.

9. Procédé selon la revendication 1, **caractérisé en ce que** le signal électrique (27) est généré en tant que signal sinusoïdal avec au moins une fréquence principale des tensions sur le générateur de courant alternatif (1) par rapport à la terre (PE), en option, à chaque fréquence principale des tensions sur le générateur de courant alternatif (1) par rapport à la terre (PE), la phase du signal sinusoïdal étant réglée à une valeur à laquelle, après la soustraction du signal électrique (28) mis à l'échelle, la valeur effective du courant différentiel (DI) adopte un minimum.

10. Procédé selon au moins l'une quelconque des revendications précédentes, **caractérisé en ce que** des modifications d'une capacité de fuite (6, 7) du générateur de courant alternatif (1) sont reproduites.

11. Procédé selon au moins l'une quelconque des revendications précédentes, **caractérisé en ce que** le facteur de mise à l'échelle est suivi en continu selon un procédé de tracking.

12. Procédé selon au moins l'une quelconque des revendications précédentes, **caractérisé en ce que** les tensions sur le générateur de courant alternatif (1) par rapport à la terre (PE) sont prises en compte avant et le courant différentiel (DI) est pris en compte après un onduleur (3) du générateur de courant alternatif (1).

13. Dispositif (10) destiné à déterminer la part de courant différentiel résiduel (FI) d'un courant différentiel (DI), avec un transformateur (5) de courant total qui détecte le courant différentiel (DI) en tant que courant total via toutes les conduits (L, N) de passage du courant d'un générateur de courant alternatif (1), avec un système de compensation qui génère un signal électrique (27) qui est dépendant de tensions sur générateur de courant alternatif (1) par rapport à la terre (PE) et qui est en phase avec une part de courant de fuite (AI) du courant différentiel (DI) et le soustrait du courant différentiel (DI), **caractérisé en ce que** le système de compensation comporte un système de mise à l'échelle (14), qui avant de le soustraire du courant différentiel (DI), multiplie le signal électrique (27) par un facteur de mise à l'échelle, alors qu'il fait suivre en continu le facteur de mise à l'échelle, de telle sorte qu'après soustraction du signal électrique (28) mis à l'échelle, à la valeur actuelle, la valeur effective du courant différentiel (DI) présente un minimum.

14. Dispositif selon la revendication 13, **caractérisé en ce que** des condensateurs de mesure (11 et 12) sont prévus entre le générateur de courant alternatif (1) et la terre (PE).

15. Dispositif selon la revendication 14, **caractérisé en ce que** le système de mise à l'échelle (14) met à l'échelle une tension qui chute sur une résistance de mesure (17) qui est traversée par un courant de fuite s'écoulant par l'intermédiaire des condensateurs de mesure (11 et 12) vers la terre (PE) et **en ce que** le système de compensation soustrait la tension mise à l'échelle d'un signal de tension du transformateur (5) de courant total.
